# EUROPÄISCHE PATENTSCHRIFT

(11) **EP 0 611 278 B1**
(45) Veröffentlichungstag und Bekanntmachung des Hinweises auf die Patenterteilung: **11.09.1996**
(21) Anmeldenummer: 93912590.2
(22) Anmeldetag: 16.06.1993
(51) Int. Cl.: A01D 82/00

(54) **AN EIN LANDWIRTSCHAFTLICHES FAHRZEUG ANBRINGBARE VORRICHTUNG ZUM VORPRESSEN VON AUF SCHWADEN LIEGENDEM GRAS, HEU ODER ANDEREN WEICHEN PFLANZENTEILEN**
DEVICE ATTACHABLE TO A FARMING VEHICLE FOR PREPRESSING GRASS, HAY OR OTHER SOFT VEGETABLE PARTS LYING IN SWATHS
DISPOSITIF POUVANT ETRE ATTELE A UN VEHICULE AGRICOLE AFIN DE PRECOMPRESSER DE L'HERBE, DU FOIN OU D'AUTRES ELEMENTS VEGETAUX MOUS SE PRESENTANT SOUS FORME D'ANDAINS

(30) Priorität: 17.06.1992 DE 4219825
(43) Veröffentlichungstag der Anmeldung: 24.08.1994
(73) Patentinhaber: KLASEN, Anton, D-54597 Fleringen (DE)
(72) Erfinder: KLASEN, Anton, D-54597 Fleringen (DE)
(74) Vertreter: Serwe, Karl-Heinz, Dipl.-Ing.
(86) Internationale Anmeldenummer: DE9300518
(87) Internationale Veröffentlichungsnummer: WO9325066

(56) Entgegenhaltungen:
- EP-A- 0 205 206
- DE-A- 2 336 060
- DE-A- 3 512 300
- FR-A- 1 106 266
- FR-A- 1 459 672
- FR-A- 1 550 373
- FR-A- 1 578 285
- FR-A- 2 108 290
- GB-A- 2 109 662
- NL-A- 6 601 742
- NL-A- 7 710 410
- US-A- 3 364 665

## Beschreibung

Die Erfindung betrifft eine an ein landwirtschaftliches Fahrzeug anbringbare Vorrichtung zum Vorpressen von auf Schwaden liegendem Gras, Heu oder anderen weichen Pflanzenteilen nach dem Oberbegriff des Anspruchs 1.

Eine derartige Vorrichtung ist bereits aus NL-A-660 1742 bekannt.

Es ist im landwirtschaftlichen Betrieb üblich, die auf Wiesen oder Feldern geernteten und abgeschnittenen Pflanzenteile einem Fahrsilo oder einer Ballenpresse zuzuführen. Da geschnittenes Gras oder andere Futterpflanzen nach dem Mähen noch ihre ursprüngliche Struktur aufweisen, ist es beispielsweise nach Einbringen in ein Fahrsilo notwendig, die Struktur der Halme durch häufiges überfahren mit schwerem Gerät zu zerstören, um so einen kompakten festen Block zu bilden. Das Zusammendrücken des Erntegutes muß, um einen möglichst luftfreien Block zu erzielen, schichtweise erfolgen, was ein mehrmaliges überfahren notwendig macht und daher zeitaufwendig ist.

Aufgabe der Erfindung ist es daher, eine Vorrichtung zu schaffen, mit der es möglich ist, das geerntete, auf Schwaden liegende Gut vor Aufnahme in einen Ladewagen und vor Abtransport vorzupressen.

Es ist zwar schon bekannt, um den Trocknungsverlauf des geschnittenen Futters zu verbessern, das geschnittene Erntegut mit Hilfe eines Aufbereiters zu behandeln. Bei einem bekannten Aufbereiter wird hierzu die Faserstruktur durch Knicken und Spleißen der Grashalme gebrochen. Der motorisch angetriebene Aufbereiter weist hierzu einen Rotor mit drei Wellen auf, an denen Schlegel pendelnd aufgehängt sind.

Zum Vorpressen ist ein solches Gerät jedoch nicht geeignet.

Die Lösung der gestellten Aufgabe ist durch eine in Fahrtrichtung vor und oberhalb der Quetscheinrichtung um eine waagerechte Achse drehbar Andrückvorrichtung gekennzeichnet.

Vorteilhaft sind die nebeneinander angeordneten Quetscheinrichtungen als gegeneinander drehbare Räder mit elastischen Mantel als Quetschfläche ausgebildet. Nach einer anderen Ausführungsform sind die Quetschflächen der Quetscheinrichtungen an umlaufenden Bänder angeordnet.

Vorteilhaft weisen die Räder einen mit Druckluft gefüllten Gummimantel auf. Die Radmäntel haben nach einer bevorzugten Ausführungsform quer zur Laufrichtung angeordnete Rillenprofile.

Die Drehgeschwindigkeit der beiden Quetschvorrichtungen ist vorteilhaft unterschiedlich. Die Quetscheinrichtungen sind vorzugsweise höhenverstellbar am Fahrzeug angeordnet und die Winkelstellung der beiden Quetscheinrichten zueinander ist vorteilhaft verstellbar. Der Abstand der beiden Quetscheinrichtungen zueinander ist ebenfalls veränderbar.

Die Andrückvorrichtung ist vorzugsweise höhenverstellbar. Sie weist einen Fühler auf, der mit dem Antrieb der Quetscheinrichtungen wirksam verbunden ist.

Nach einer vorteilhaften Ausführungsform ist die Andrückvorrichtung als freilaufendes Rad mit Gummibereifung ausgebildet. Das Rad weist vorteilhaft umlaufend ein verjüngtes Außenprofil auf.

Die Erfindung ist in den Zeichnungen beispielhaft dargestellt. Es zeigen:
- Fig. 1: die Vorrichtung zum Vorpressen in Draufsicht,
- Fig. 2: die Vorrichtung nach Fig. 1 vor und nach dem Pressvorgang,
- Fig. 3: die Ausführungsform nach Fig. 1 in Seitenansicht,
- Fig. 4: die Vorrichtung entsprechend Fig. 1 in etwas anderer Ausführungsform,
- Fig. 5: die Vorrichtung entsprechend Fig. 3 mit einem abgewinkelten Quetschrad,
- Fig. 6: die Vorrichtung mit Verstelleinrichtung zur Änderung des Pressdrucks in Seitenansicht,
- Fig. 7: die Vorrichtung nach Fig. 6 in Draufsicht
- Fig. 8: die Andrückvorrichtung mit Fühler beim Pressen,
- Fig. 9: die Vorrichtung nach Fig. 8 vor dem Pressen,
- Fig. 10: die Vorpresse mit umlaufenden Bändern als Quetschflächen.

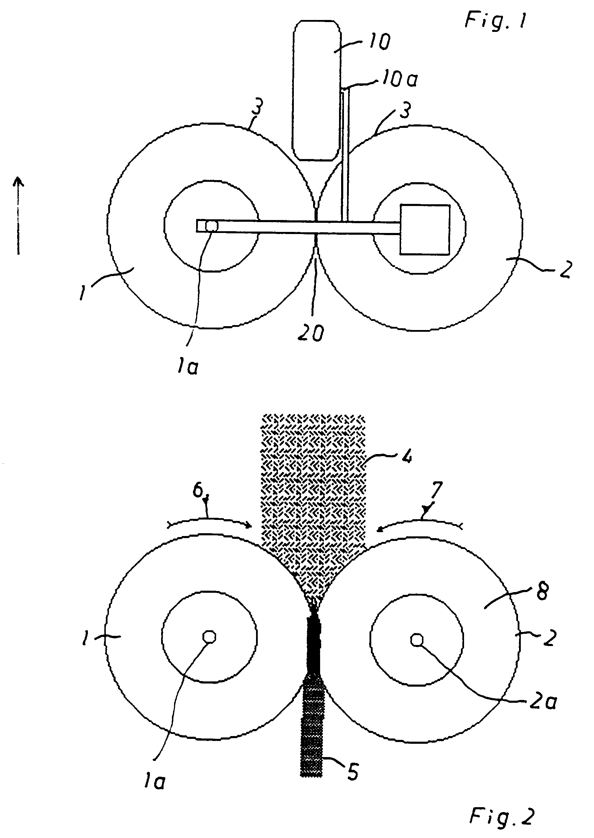

Die Vorrichtung zum Vorpressen von auf Schwaden liegendem Gras, Heu oder anderen weichen Pflanzenteilen nach den Fig. 1 bis 3 besteht aus zwei nebeneinander angeordneten, um senkrechte Achsen 1a, 2a drehbaren Rädern 1 und 2, die als Quetscheinrichtungen ausgebildet sind und deren umlaufende Quetschflächen 3 derart zusammenwirkend angeordnet sind, daß das Quetschgut 4 zwischen den Quetschflächen beim Fahren eingezogen und zusammengepreßt wird, so daß das auf Schwaden liegende Gut 4 nach Verlassen der Quetscheinrichtungen als zusammengepreßtes Gut 5 entweder auf der Wiese oder dem Feld abgelegt oder sogleich einem Ladewagen zugeführt wird. Durch den Quetschvorgang wird das geschnittene Grün gebrochen, so daß es seine ursprüngliche Struktur verliert und sowohl das äußerlich anheftende Wasser abläuft als auch die in den Pflanzenteilen befindliche Feuchtigkeit ausgequetscht wird. Hierdurch wird das Gesamtvolumen stark verringert, so daß sich beispielsweise beim Einbringen in ein Fahrsilo ein weiteres Zusammendrücken durch überfahren erübrigt.

Die als Quetscheinrichtung ausgebildeten Räder 1 und 2 sind in Pfeilrichtung 6 bzw. 7 gegeneinander drehbar, so daß das zu pressende Gut 4 eingezogen wird. Mindestens eins der beiden Räder ist motorisch antreibbar, wobei dies von der an einem landwirtschaftlichen Traktor vorhandenen Hydraulikvorrichtung erfolgen kann, während das andere Rad durch Reibschluß mitgenommen wird. Es ist jedoch auch möglich, beide Räder anzutreiben, wobei vorteilhaft die Umlaufgeschwindigkeit unterschiedlich ist.

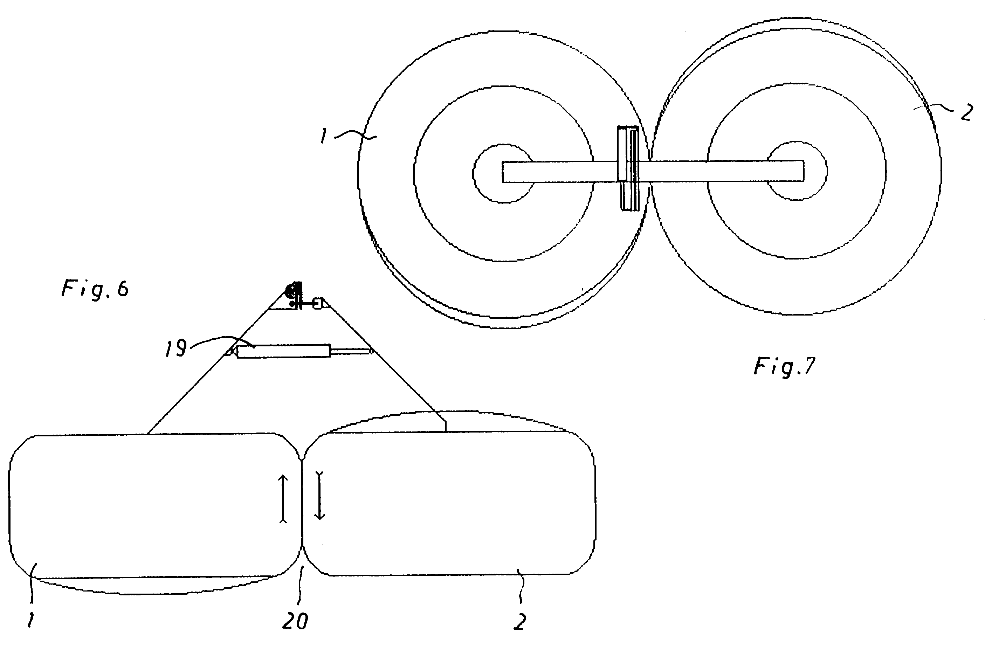

Die Räder weisen einen mit Druckluft gefüllten Gummimantel 8 auf. Je nach eingegebenem Luftdruck läßt sich der Quetschdruck einstellen. Darüber hinaus ist es möglich, die beiden Räder durch Federspannung,Hydraulikkolben 19 (Fig. 6) od.dgl. in gewünschter Weise gegeneinander zu drücken. Der zwischen den beiden Quetschflächen vorhandene Spalt 20 kann durch Verstellen des Abstandes der beiden Räder zueinander verändert werden, um die Quetscheinrichtung der zu pressenden Menge und Art des Pressgutes anzupassen.

Vorteilhaft weisen die Quetschräder 1 und 2 quer zur Laufrichtung angeordnete Rillen 9 auf, um das ausgequetschte Wasser zu führen und den Pressvorgang zu verbessern und bei einseitigem Antrieb der Quetscheinrichtung eine sichere Mitnahme des freidrehbaren Rades zu gewährleisten.

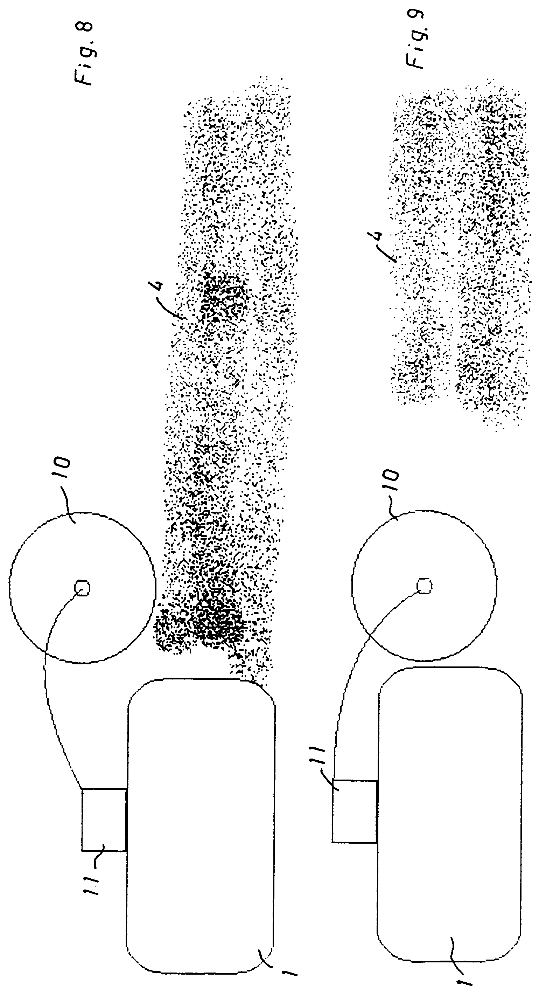

In Fahrtrichtung vor und oberhalb der Quetschräder 1 und 2 ist ein auf einer waagerechten Achse 10a freilaufendes Andrückrad 10 angeordnet, das dazu dient, das aufzunehmende Gut hinunter zu drücken, damit es den Quetscheinrichtungen besser zugeführt wird. Die Andrückvorrichtung ist höhenverstellbar und weist vorteilhaft einen Fühler auf, so daß, wie in den Fig. 8 und 9 erkennbar, der Antrieb 11 der Quetschräder 1 bzw. 2 je nach Stellung der Andrückrad 10 ein- bzw. ausschaltbar ist. Wie Fig. 9 erkennen läßt, befindet sich hierbei die Andrückrad 10 in unterer Stellung, bevor das Quetschrad 1 das zu pressende Gut erreicht. In dieser Stellung ist die Drehbewegung des Quetschrades 1 ausgestellt. Durch Erreichen des Grasschwadens 4 wird das Andrückrad 10 angehoben und dadurch die Drehbewegung des Quetschrades 1 eingeschaltet.

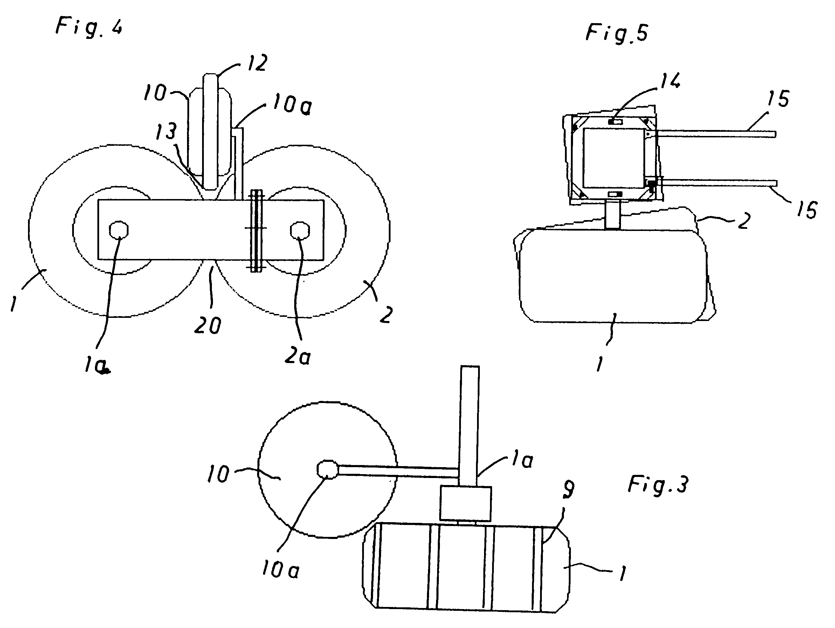

Wie Fig. 4 erkennen läßt, ist das Andrückrad 10 mit einem Außenprofil 12 versehen, so daß das Andrückrad 10 weit in den Einführspalt 13 zwischen den Quetschrädern 1 und 2 eingreifen kann.

Nach Fig. 5 und 6 ist das Quetschrad 2 gegenüber dem Quetschrad 1 kippbar, wodurch, insbesondere bei trocknem Heu eine bessere Quetschwirkung durch Brechen der angetrockneten Halme erreicht wird. Die Veränderung der Winkelstellung kann ebenfalls über die Hydraulik der Zugvorrichtung aber auch von Hand erfolgen, wozu ein Verdrehen nach Lösen der Befestigungsschrauben 14 möglich ist.

Fig. 5 zeigt die Verbindung der Vorpresseinrichtung über eine Dreipunktanhängung 15 des nichtgezeigten landwirtschaftlichen Traktors. Durch diese Dreipunktanhängung sind die Quetschräder höhenverstellbar, so daß die Quetscheinrichtung beim Fahren auf der Straße angehoben werden und beim Betrieb auf der Wiese oder dem Feld abgesenkt werden kann.

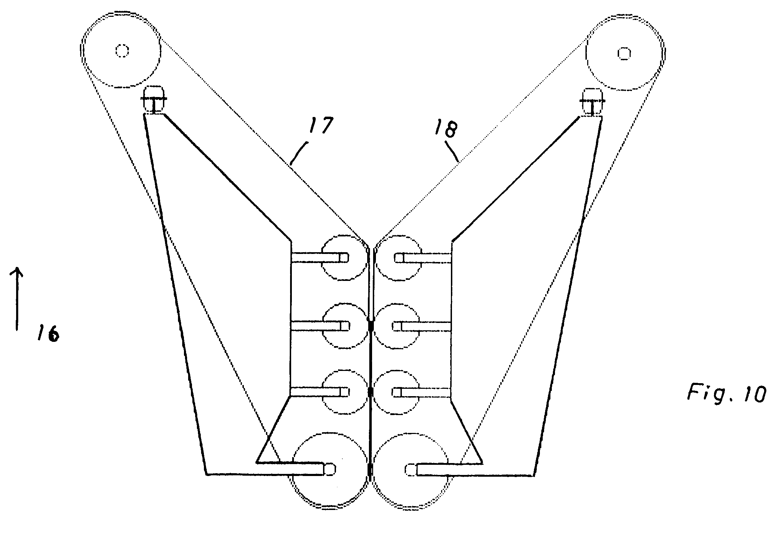

Bei der Ausführungsform nach Fig. 10, bei der die Quetscheinrichtung in Pfeilrichtung 16 bewegt wird, sind an Stelle von zwei Quetschrädern umlaufende Quetschbänder 17 und 18 vorgesehen, die in Pfeilrichtung ebenfalls gegeneinander laufen. Bei dieser Vorrichtung sind die einander zugewandten Quetschflächen auf einer größeren Länge gegeben, wodurch der Quetschvorgang verbessert wird. Ebenso wie bei der Anordnung mit Quetschrädern, ist der Abstand zwischen den Quetschflächen je nach dem zu pressenden Gut veränderbar. Auch können die Quetschflächen Querprofile aufweisen.

## Patentansprüche

1. An ein landwirtschaftliches Fahrzeug anbringbare Vorrichtung zum Vorpressen von auf Schwaden liegendem Gras, Heu oder anderen weichen Pflanzenteilen, mit zwei nebeneinander angeordneten, um senkrechte Achsen (1a, 2a) drehbare Quetscheinrichtungen (1, 2), deren umlaufende Quetschflächen (3) derart zusammenwirkend angeordnet sind, daß das Quetschgut (4) zwischen den Quetschflächen beim Fahren eingezogen und zusammengepreßt wird, wobei mindestens eine Quetscheinrichtung motorisch antreibbar ist, gekennzeichnet durch eine in Fahrtrichtung vor und oberhalb der Quetscheinrichtungen um eine waagerechte Achse (10a) drehbare Andrückvorrichtung (10).

2. Vorrichtung nach Anspruch 1, dadurch gekennzeichnet, daß die nebeneinander angeordneten Quetscheinrichtungen als gegeneinander drehbare Räder (1, 2) mit elastischem Mantel (8) als Quetschfläche ausgebildet sind.

3. Vorrichtung nach Anspruch 1, dadurch gekennzeichnet, daß die Quetschflächen der Quetscheinrichtungen als um laufende Bänder angeordnet sind.

4. Vorrichtung nach den Ansprüchen 1 und 2, dadurch gekennzeichnet, daß die Räder (1, 2) einen mit Druckluft gefüllten Gummimantel (8) aufweisen.

5. Vorrichtung nach einem der Ansprüche 1 bis 2, dadurch gekennzeichnet, daß die Radmäntel (8) quer zur Laufrichtung angeordnete Rillenprofile (9) aufweisen.

6. Vorrichtung nach einem der Ansprüche 1 bis 3, dadurch gekennzeichnet, daß die Drehgeschwindigkeit der beiden Quetschvorrichtungen (1, 2) unterschiedlich ist.

7. Vorrichtung nach einem der Ansprüche 1 bis 3, dadurch gekennzeichnet, daß die Quetscheinrichtungen (1, 2) höhenverstellbar am Fahrzeug angeordnet sind.

8. Vorrichtung nach einem der Ansprüche 1 bis 3, dadurch gekennzeichnet, daß die Winkelstellung der beiden Quetscheinrichtungen (1, 2) zueinander verstellbar ist.

9. Vorrichtung nach einem der Ansprüche 1 bis 3, dadurch gekennzeichnet, daß der Abstand der beiden Quetscheinrichtungen (1, 2) zueinander veränderbar ist.

10. Vorrichtung nach Anspruch 1, dadurch gekennzeichnet, daß die Andrückvorrichtung (10) höhenverstellbar ist.

11. Vorrichtung nach Anspruch 10, dadurch gekennzeichnet, daß die Andrückvorrichtung (10) einen Fühler aufweist, der mit dem Antrieb der Quetscheinrichtungen (1, 2) wirksam verbunden ist.

12. Vorrichtung nach Anspruch 10, dadurch gekennzeichnet, daß die Andrückvorrichtung (10) als freilaufendes Rad mit Gummibereifung ausgebildet ist.

13. Vorrichtung nach Anspruch 12, dadurch gekennzeichnet, daß das Rad (10) umlaufend ein verjüngtes Außenprofil (12) aufweist.

## Claims

1. Device attachable to an agricultural vehicle for prepressing grass, hey or other soft plant parts lying in swaths, comprising two adjacent crushing devices (1, 2) which rotate around vertical axes (1a, 2a) and the rotary crushing surfaces (3) of which co-act in such a manner that the material to be crushed (4) is pulled inbetween the crushing surfaces and compressed during driving, and that at least one crushing device of driven by a motor, **characterized by** a press-on mechanism (10) which is rotated in the driving direction in front of and above the crushing devices around a horizontal axis (10a).

2. Device according to Claim 1, **characterized in that** the adjacent crushing devices are designed as counter-rotating wheels (1, 2) with an elastic coating (8) serving as a crushing surface.

3. Device according to Claim 1, **characterized in that** the crushing surfaces of the crushing devices are arranged as rotary belts.

4. Device according to Claims 1 and 2, **characterized in that** the wheels (1, 2) comprise a rubber coating (8) filled with compressed air.

5. Device according to one of Claims 1 to 2, **characterized in that** the wheel coatings (8) have grooved treads (9) arranged transversely to the running direction.

6. Device according to one of Claims 1 to 3, **characterized in that** the rotary speed of both crushing devices (1, 2) differs.

7. Device according to one of Claims 1 to 3, **characterized in that** the crushing devices (1, 2) are mounted on the vehicle so as to be height adjustable.

8. Device according to one of Claims 1 to 3, **characterized in that** the angular position of both crushing devices (1, 2) relative to each other is adjustable.

9. Device according to one of Claims 1 to 3, **characterized in that** the gap between both crushing devices (1, 2) is changeable.

10. Device according to Claim 1, **characterized in that** the press-on mechanism (10) is height adjustable.

11. Device according to Claim 10, **characterized in that** the press-on mechanism (10) comprises a sensor which is operationally connected to the drive of the crushing devices (1, 2).

12. Device according to Claim 10, **characterized in that** the press-on mechanism (10) is designed as a free-running wheel with a rubber tyre.

13. Device according to Claim 12, **characterized in that** the wheel (10) has a periphally narrowing exterior profile (12).

## Revendications

1. Dispositif pouvant être monté sur un véhicule agricole pour la compression initiale d'herbe, de foin ou autres parties végétales molles placées sur andains, comportant deux dispositifs rotatifs de compactage (1, 2) disposés côte à côte et tournant autour d'axes verticaux (1a, 2a), dont les faces de compactage (3) sont disposées de manière à coopérer afin que le produit à compacter (4) soit introduit et compacté entre les faces de compactage pendant que le véhicule roule, tandis qu'au moins l'un des dispositifs de compactage peut être entraîné par un moteur, ledit dispositif étant caractérisé par la présence devant et au-dessus des dispositifs de compactage d'un dispositif de serrage (10) pouvant tourner autour d'un axe horizontal (10a).

2. Dispositif selon la revendication 1, caractérisé en ce que les dispositifs de compactage disposés côte à côte sont réalisés sous la forme de roues (1, 2) rotatives en directions antagonistes et munis d'un revêtement élastique (8) servant de faces de compactage.

3. Dispositif selon la revendication 1, caractérisé en ce que les faces de compactage des dispositifs de compactage sont disposées de manière à former des bandes de roulement.

4. Dispositif selon les revendications 1 et 2, caractérisé en ce que les roues (1, 2) présentent une enveloppe en caoutchouc (8) remplie d'air comprimé.

5. Dispositif selon l'une des revendications 1 à 2, caractérisé en ce que les enveloppes (8) des roues présentent des profils nervurés (9) disposés transversalement au sens de la marche.

6. Dispositif selon l'une des revendications 1 à 3, caractérisé en ce que les deux dispositifs de compactage (1, 2) tournent à des vitesses différentes.

7. Dispositif selon l'une des revendications 1 à 3, caractérisé en ce que les dispositifs de compactage (1, 2) sont disposés sur le véhicule de manière réglable en hauteur.

8. Dispositif selon l'une des revendications 1 à 3, caractérisé en ce que la position angulaire réciproque des deux dispositifs de compactage (1, 2) est réglable.

9. Dispositif selon l'une des revendications 1 à 3, caractérisé en ce que la distance entre les deux dispositifs de compactage (1, 2) est modifiable.

10. Dispositif selon la revendication 1, caractérisé en ce que le dispositif de serrage (10) est réglable en hauteur.

11. Dispositif selon la revendication 10, caractérisé en ce que le dispositif de serrage (10) présente un palpeur qui est en liaison active avec le moteur des dispositifs de compactage (1, 2).

12. Dispositif selon la revendication 10, caractérisé en ce que le dispositif de serrage (10) est réalisé sous la forme d'une roue tournant librement et munie d'une enveloppe en caoutchouc.

13. Dispositif selon la revendication 12, caractérisé en ce que la roue (10) présente sur son pourtour un profil extérieur (12) cunéiforme.
